(19) Europäisches Patentamt
European Patent Office
Office européen des brevets

(11) EP 0 681 288 B1

(12) EUROPEAN PATENT SPECIFICATION

(45) Date of publication and mention of the grant of the patent: **11.06.2003 Bulletin 2003/24**

(51) Int Cl.[7]: **G11B 5/702**, G11B 5/633, G11B 5/712, G03C 7/24

(21) Application number: **95105022.8**

(22) Date of filing: **04.04.1995**

(54) **Photographic elemet with a transparent magnetic film**

Fotografisches Element mit einer transparenten magnetischen Schicht

Elément photographique doté d'un film magnétique transparent

(84) Designated Contracting States:
**GB**

(30) Priority: **18.04.1994 US 229267**
**10.03.1995 US 402460**

(43) Date of publication of application:
**08.11.1995 Bulletin 1995/45**

(73) Proprietor: **EASTMAN KODAK COMPANY**
**Rochester, New York 14650-2201 (US)**

(72) Inventors:
- **Nair, Mridula, c/o Eastman Kodak Company Rochester, New York 14650-2201 (US)**
- **Oltean, George L., c/o Eastman Kodak Company Rochester, New York 14650-2201 (US)**
- **Lobo, Lloyd Anthony, c/o Eastman Kodak Company Rochester, New York 14650-2201 (US)**

(74) Representative: **Haile, Helen Cynthia et al**
**Kodak Limited**
**Patent, W92-3A,**
**Headstone Drive**
**Harrow, Middlesex HA1 4TY (GB)**

(56) References cited:
**EP-A- 0 017 834**
**US-A- 4 562 117**
**US-A- 4 761 338**
**US-A- 5 229 259**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 681 288 B1

## Description

### Field of the Invention

This invention relates to a photographic element having a transparent magnetic layer.

### Background

Conventional magnetic recording elements that are used for recording sounds or images are generally opaque to visible light regardless of the nature of the magnetic particles used in such elements. For example, motion picture films often are provided with a magnetic sound track which generally is opaque and does not cover that portion of the film used in the projection of images.

Canadian Patent 686,172 shows that a magnetic recording layer may be transparent to visible light when it contains low concentrations of magnetizable particles. According to this patent, such a layer is coated over a layer containing descriptive material which allows a user to simultaneously hear and see certain subject matter. However, this patent points out that the electromagnetic characteristics, i.e., the magnetic recording and reproducing characteristics, of such a layer are inferior to those of conventional magnetic layers as a result of the very low concentration of magnetizable particles.

U.S. Patent No. 3,782,947 discloses a photographic product which carries magnetic particles distributed across the image area of the product. The particle distribution and sizes are so designed that the composite granularities of the photographic and magnetic recording media are such that the magnetic distribution is essentially transparent in a photographic sense.

U.S. patent No. 4,279,945 discloses a process of preparing magnetic recording elements containing a transparent recording layer. According to this patent, the magnetic recording and reproducing characteristics obtained are comparable to conventional opaque magnetic layers without the need for matching the granularity of a magnetic medium to that of photographic medium. However, the process requires that the layer containing magnetic particles be treated using one or both of the following process steps, (1) compacting the layer while it is in a malleable state to reduce its thickness (e.g., calendaring), or (2) imbibing into the layer a substantially transparent liquid having a refractive index that is substantially the same as that of the binder.

Elements of the type described in the above-cited patents have not achieved widespread commercial success for various reasons. For example, the elements described in U.S. Patent No. 4,279,945, as indicated by the Figure therein, are substantially opaque at wavelengths less than about 500 nm and thus are not useful in color films. Further, the disclosed process requires that the magnetic recording layer be calendared while it is in a malleable state and/or that a transparent liquid be imbibed into the magnetic recording layer. On the other hand, U.S. Patent No. 3,782,947 contemplates coating a dispersion containing magnetic particles onto a film base. However, the quantity of solvent required in such a process is unattractive from both an economic and environmental standpoint. Additionally, in continuous wide web coating techniques adapted for commercial manufacturing operations, solvent attack on the film base and can render the element unusable, resulting in unacceptable manufacturing inefficiencies and excessive costs. Moreover, it is difficult to prepare magnetic recording layers in such a coating process having a thickness of less than about 5 micrometers (microns).

U.S. Patent No. 4,990,276 discloses a dispersion of magnetic particles, a dialkylester of phthalic acid and a dispersing agent. U.S. Patent No. 5,254,449 discloses the use of such a dispersion to provide a substantially transparent magnetic recording layer in the preparation of a novel photographic element. The process described in this patent calls for dilution of the dispersion with a binder in an organic solvent such as a mixture of methylene chloride and methanol, to form a casting composition. The casting composition is then extruded under pressure onto a photographic support.

U.S. Patent No. 5,229,259 discloses a silver halide photographic material comprising a silver halide emulsion layer on at least one side of a support and at least one magnetic recording layer on at least one side of the support, where the magnetic recording layer is transparent and comprises a ferromagnetic powder, a silica and alumina coprecipitate on the surface of the ferromagnetic powder, and a resinous or hydrophilic binder.

It is evident that it would be desirable to provide a photographic element with a magnetic layer of the desired transparency without the use of an organic solvent. Further, it is evident that it would be desirable to provide a stable aqueous dispersion of magnetic particles from which to prepare such an element.

### Problem To Be Solved By The Invention

It is desirable to eliminate the use of organic solvents in making a magnetic recording element, in particular a photographic element, such as a film, having a photographically transparent magnetic layer while still maintaining

the optical quality of the photographic element. The use of organic solvents is unattractive for safety and environmental reasons. Coatings of aqueous magnetic dispersions on the other hand tend to exhibit poor quality and result in high optical density and granularity.

## Summary Of The Invention

This invention provides a novel photographic element which contains a magnetic recording layer which has excellent magnetic characteristics and which is photographically transparent by virtue of its low granularity and optical density.

Accordingly, this invention relates to a photographic element comprising a photographic support, a light sensitive layer and a transparent magnetic recording layer, prepared by adding a film-forming binder to a stable fine solid aqueous dispersion of magnetic particles in an aqueous medium containing from 20 to 100 wt%, based on the weight of the dispersed magnetic particles, of a surface active dispersant having an HLB number of at least 8 to form a coating composition and applying the resulting composition onto a photographic support, wherein the dispersant is as further specified in claim 1.

In preferred photographic embodiments of the invention, the film forming binder is gelatin or a gelatin derivative, and from 0.1-50 wt%, based on the weight of gelatin, of a polyelectrolyte having an average molecular weight of at least about 50,000 that is capable of interacting with the gelatin so as to improve the stability of the wet coating is also added to the coating composition. Such coating compositions have been found to advantageously produce haze-free transparent coatings.

## Brief Description Of The Drawings

Figure 1 through Figure 4 are photomicrographs of a magnetic layer on a support in accordance with this invention.

Figure 5 is a comparative photomicrograph of a magnetic layer on a support produced from an organic casting solution of magnetic particles.

## Advantageous Effect Of The Invention

This invention provides a stable aqueous dispersion of magnetic particles that when combined with a film-forming binder, such as gelatin in water, can be coated onto a support to provide a transparent magnetic recording element whose optical quality matches that of a similar layer coated from an organic solvent. The aqueous system is environmentally more sound compared to equivalent organic solvent dispersions. Coatings made from water are in general cheaper than those produced from organic solvents. Further, the dispersion in gelatin can be hardened to control swell without compromising the optical quality of the coating.

## Detailed Description Of The Invention

This invention relates to transparent layers containing magnetic particles, the layers being capable of having coded information written and read therefrom. The transparent layers containing magnetic particles in accordance with this invention are particularly applicable for use in combination with photographic elements wherein information can be written into the magnetic layer without affecting the quality and performance of the light-sensitive photographic elements.

It is a feature of this invention that the transparent magnetic layers are prepared from a stable aqueous dispersion of magnetic particles. The aqueous dispersion contains substantially no organic solvent.

The magnetic layer may comprise, for example, fine ferromagnetic powders such as ferromagnetic gamma-iron oxides, cobalt surface-treated ferromagnetic iron oxides, cobalt-doped ferromagnetic iron oxides, cobalt containing $Fe_2O_3$, ferromagnetic magnetites, cobalt-containing ferromagnetic magnetites, ferromagnetic chromium dioxides, ferromagnetic metal powders, ferromagnetic iron powders, ferromagnetic alloy powders and the class of ferromagnetic ferrite powders including barium ferrites. Additionally, the above mentioned powder particles may be modified to provide lower light extinction and scattering coefficients by providing them with a shell, of at least the same volume as the magnetic core, of a low refractive index material that has its refractive index lower than the transparent polymeric material used to form the magnetizable layer. Typical shell materials may include amorphous silica, vitreous silica, glass, calcium fluoride, magnesium fluoride, lithium fluoride, polytetrafloroethylene and fluorinated resins. Examples of the ferromagnetic alloy powders include those comprising at least 75% by weight of metals which comprise at least 80% by weight of at least one ferromagnetic metal alloy (such as Fe, Co, Ni, Fe-Co, Fe-Ni, Co-Ni, Co-Ni-Fe) and 20% or less of other components (such as Al, Si, S, Sc, Ti, V, Cr, Mn, Cu, Zn, Y, Mo, Rh, Re, Pd, Ag, Sn, B, Ba, Ta, W, Au,

Hg, Pb, La, Ce, Pr, Nd, Te, and Bi). The ferromagnetic metals may contain a small amount of water, a hydroxide or an oxide. In addition, magnetic oxides with a thicker layer of lower refractive index oxide or other material having a lower optical scattering cross section as taught in U.S. 5,252,444 may also be used.

The dispersion in accordance with this invention contains magnetic particles which preferably are acicular or needle like magnetic particles. The average length of these particles along the major axis preferably is less than about 0.3, more preferably, less than about 0.2 micron. The particles preferably exhibit an axial ratio, that is, a length to diameter thickness ratio of up to about 5 or 6 to 1. Preferred particles have a specific surface area of at least $30m^2/g$, more preferably of at least $40m^2/g$. Typical acicular particles of this type include for example, particles of ferro and ferro iron oxides such as gamma-ferric oxide, complex oxides of iron and cobalt, various ferrites and metallic iron pigments. Alternatively, small tabular particles such as barium ferrites and the like can be employed. The particles can be doped with one or more ions of a polyvalent metal such as titanium, tin, cobalt, nickel, zinc, maganese, chromium, or the like as is known in the art.

A preferred particle consists of Co surface treated $\gamma$-$Fe_2O_3$ having a specific surface area of greater than $40m^2/g$. Particles of this type are commercially available and can be obtained from Toda Kogyo Corporation under the trade names CSF 4085V2, CSF 4565V, CSF 4585V and CND 865V and are available on a production scale from Pfizer Pigments Inc. under the trade designations RPX-4392, RPX-5003, RPX-5026 and RPX-5012. For good magnetic recording, the magnetic particles preferably exhibit coercive force above about 500 Oe and saturation magnetization above 70 emu/g.

In accordance with this invention, the transparent magnetic layer is prepared by initially forming a concentrated dispersion of the magnetic particles in water together with a surface active dispersant having an HLB number of at least 8, preferably an amphipathic water-dispersible or soluble polymeric surface active dispersant having a molecular weight of less than 50,000. Surface active dispersants for the purposes of this invention are those which are capable of depressing the surface tension of distilled water by at least 20 dynes/cm at their critical micelle concentration at 25°C. The concentrated dispersion of magnetic particles may be formed by milling an aqueous mixture of the magnetic particles and the dispersant in a device such as a ball mill, a roll mill, a high speed impeller mill, media mill, an attritor, a sand mill or the like. Milling is continued for a sufficient time to ensure that substantially no agglomerates of the magnetic particles remain.

The concentration of the magnetic particles in the dispersion is preferably about 5 to about 75%, more preferably about 10 to about 50% and most preferably about 15 to about 40%, the percentages being by weight based on the weight of the dispersion.

The length of time required depends on the particular milling device used. In general, milling should be continued from about 0.5 to about 8 hours, preferably from about 1 to about 4 hours.

As mentioned above, the magnetic particles are milled in an aqueous slurry containing a surface active dispersant having an HLB number of at least 8. The HLB number of a dispersant is a measure of the hydrophilic/lipophilic balance of the dispersant and can be determined as described in "Polymeric Surfactants," Surfactant Science Series, volume 42, page 221, by I. Piirma.

The general class of preferred dispersants are water-soluble or water-dispersible surface active polymers represented by one of the following structures I-IV:

| | | | | |
|---|---|---|---|---|
| A-B | A-B-A | 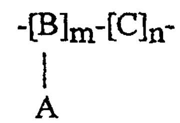 | and | $(AB)_xQ(BA)_z$ |
| I | II | III | | IV |

wherein each A independently represents a poly(ethylene oxide), polyethyloxazoline, poly(vinyl alcohol) or poly(vinyl pyrrolidone) unit, B and C each represent a linear or branched alkyl, aryl, alkaryl or cyclic alkyl radical containing at least 7 carbon atoms, or 3 to about 100 repeat units of a propylene oxide or higher alkylene oxide or combinations thereof, Q represents a multivalent linking group, m = 50-100 mole %, n = 1-50 mole %, with the proviso that m + n = 100 mole %, x = 1 or 2 and z = 1 or 2.

A is a poly(ethylene oxide), polyethyloxazoline, poly(vinyl alcohol), or poly(vinyl pyrrolidone) unit. B and C are radicals containing at least 7 carbon atoms, preferably 7 to 500 carbon atoms and more preferably, 15 to 300 carbon atoms. Illustrative radicals include, for example, C20-C50 alkyl, copolymer of maleic anhydride and an alkene, arylphenoxy, alkylphenoxy, poly(propylene oxide), poly(butylene oxide), or the like. Q is a multivalent linking group having

the valence of X + Z. Preferably Q is a polyamine such as ethylene diamine, tetramethylene diamine, etc., a polyhydroxy compound, such as pentaerythritol, or the like. Preferably, these polymeric dispersants have an average molecular weight of from about 500 to 50,000, more preferably about 500 to 25,000, most preferably about 1,000 to 10,000.

Generally, dispersants useful in the present invention are well known in the art and some of them are commercially available. The dispersant comprises water-soluble or dispersible block copolymers either linear or branched. Preferred dispersants comprise various poly(ethylene oxide) containing block copolymers. Examples of preferred dispersants are illustrated for example by the ethoxylated compounds as listed below.

| Trade Name | Manufacturer | Chemical Identification | HLB |
|---|---|---|---|
| Unithox ethoxylates | Petrolite | ethoxylated C24-50 n-alkane alcohols | 10-16 |
| Dapral GE202 | Akzo | partial ester of a branched carboxylic acid copolymer | >10 |
| Tetronic 908 | BASF Corporation | block copolymer of poly(ethylene oxide) and poly(propylene oxide) | >24 |
| Syn Fac 334 | Milliken Chemical | Arylphenol ethoxylate | 11 |
| Syn Fac 8216 | Milliken Chemical | Arylphenol ethoxylate | 15 |
| Syn Fac 8210 | Milliken Chemical | Polyalkoxylated aryl-phenol | 11 |
| Syn Fac 8337 | Milliken Chemical | Potassium salt of a phosphated alkoxylated aryl-phenol | 20 |

More specifically, illustrative preferred dispersants have the following structures:

$$CH_3(CH_2)_x(OCH_2CH_2)_zOM$$

$x = 24 - 50$

$z = 8 - 20$

$M = H, SO_3^- X^+, \text{or } PO_3^{2-}\ 2X^+$
where X is cation such as
$Na^+$, $K^+$, $NH_4^+$, etc.

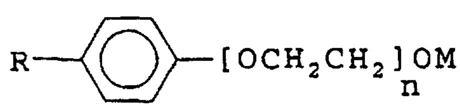

$n = 5 - 25$

R = aryl, alkyl, aralkyl

$M = H, SO_3^- X^+, \text{or } PO_3^{2-}\ 2X^+$

where X is cation such as
$Na^+$, $K^+$, $NH_4^+$, etc.

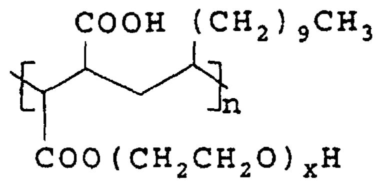

n = 10 - 20; x = 5 - 20

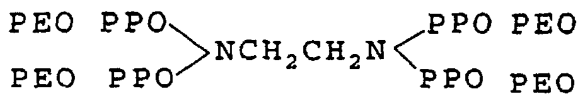

PEO = poly(ethylene oxide)

PPO = poly(propylene oxide)

The dispersants are amphipathic in nature. Such a dispersant comprises in its molecule an oleophilic group of sufficient length to adsorb firmly to the surface of the dispersed particles and also comprises a hydrophilic group of sufficient length to provide a large enough steric barrier to interparticle attraction. The dispersant may be nonionic or ionic in nature. These amphipathic dispersants are generally block copolymers, either linear or branched and have segmented hydrophilic and oleophilic portions. The hydrophilic segment may or may not comprise ionic groups and the oleophilic segment may or may not comprise polarizable groups. The dispersants utilized in the present invention are believed to function essentially as steric stabilizers in protecting the dispersion against formation of elastic and other flocs leading to increased viscosity of the aqueous dispersion. Ionic groups, if present, in the hydrophilic segment of the dispersant provide added colloidal stabilization through ionic repulsion between the dispersed particles. The polarizable groups, if present, in the oleophilic segment of the dispersant further enhance association of the dispersant through these anchoring sites with certain flocculation-prone solid particles that are polar in nature. Preferred dispersants comprise various poly(ethylene oxide) containing nonionic and anionic block copolymers. Particularly preferred are dispersants having anionic groups. Most preferred are phosphated alkyl or aryl phenol alkoxylates, such as dispersants of the formula:

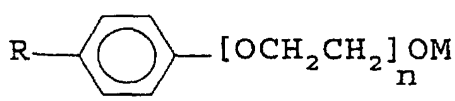

n = 5 - 25

R = aryl and M = $PO_3^{2-}$ $2X^+$
X = $Na^+$, $K^+$ or $NH_4^+$.

In general, the amount of dispersant used is 20 to 100% and most preferably 25 to 75%, the percentages being by weight of the magnetic particles.

In making the dispersion, it may be advantageous to include an ionic small molecule surfactant (i.e. nonpolymeric surfactants generally of molecular weight less than 1,000) for providing added stability through ionic repulsions. These act as antiflocculating agents and are usually ionic in nature. They can be added before or after the milling step. Representative examples of small molecular surfactants are listed below.

SMS-1

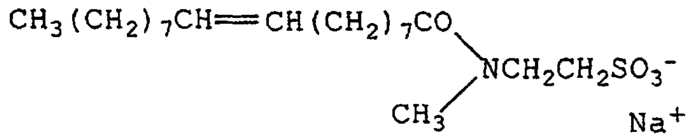

SMS-2 a mixture of:

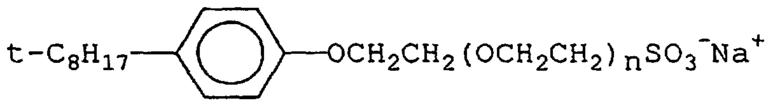

and n = 1 - 3

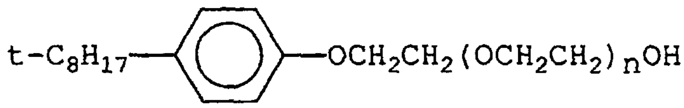

SMS-3

$CH_3—(CH_2)_{11}\text{-}SO_4^- Na^+$

SMS-4

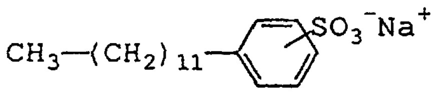

SMS-5

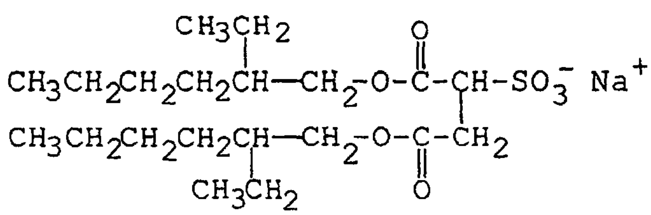

SMS-6

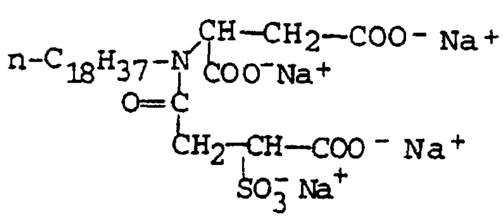

SMS-7

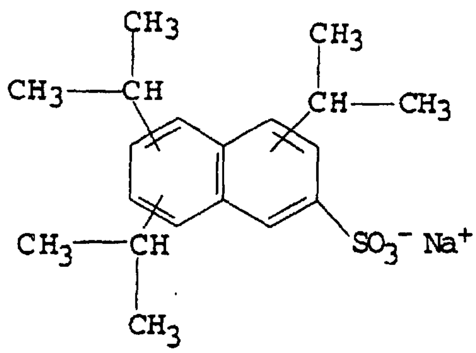

SMS-8

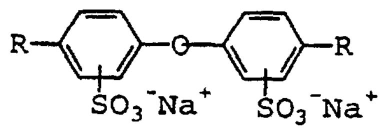

where R = $C_{12}$

branched

SMS-9

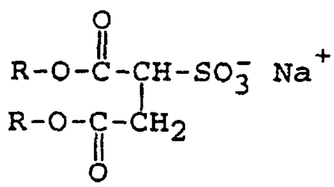

where

R = $-CH(CH_3)C_4H_9$

SMS-10 where

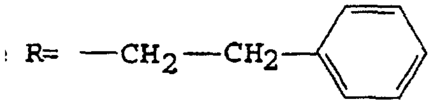

SMS-11 where

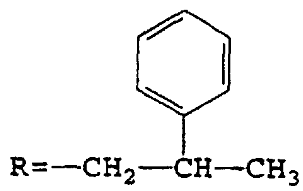

SMS-12 where

$R = -CH_2-CH(CH_2CH_3)C_3H_7$

SMS-13 where

$R = -(CH_2)_nCH_3$ (n=2,3&5)

SMS-14

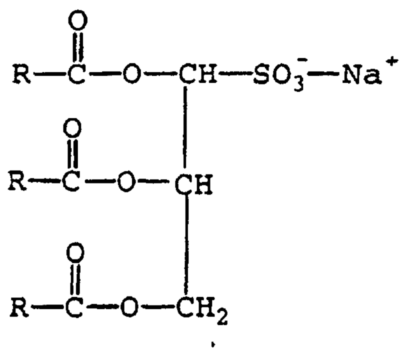

where

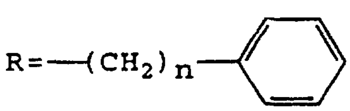 (n=2-5)

SMS-15

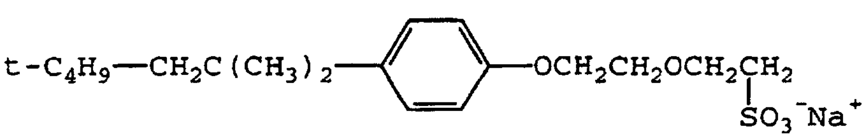

The aqueous magnetic particle dispersion in accordance with this invention are employed in the fabrication of recordable magnetic layers or films and photographic elements that include a support, a light-sensitive layer and a

transparent magnetic recording layer. Transparent magnetic recording layers or films would have widespread application in many environments wherein it would be desirable to include or encode information without interfering with the visual appearance of the object onto which the magnetic recording is made. For example, in a sheet of written text or a picture, information could be recorded in a transparent magnetic recording layer without interfering with the visual appearance of the text or the picture underlying the transparent magnetic recording layer. Such transparent recording layers can be prepared by incorporating a film forming binder in the aqueous dispersion to form a coating composition and then applying the coating composition to a substrate. For example, if it were desired to provide magnetically encoded information to this page of text, this page can be coated with the magnetic coating composition. This would then enable one not only to read the visual text in the normal manner but also to read out the information contained in the encoded transparent magnetic layer.

The primary utility for transparent magnetic recording layers is in the photographic industry wherein a photographic film can be built onto a substrate that includes a transparent recording layer. The transparent magnetic recording layer may be disposed in any position relative to the various layers of the photographic film including over the light sensitive layers, within the layers, within the base substrate, however, it is preferred that the transparent magnetic layer be applied as a layer on the side opposite the light-sensitive layers of the photographic film. This provides ease of encoding and readout. This can be achieved by coating applications widely known in both the photographic and magnetic recording fields of technology. Information can then be encoded into the magnetic layer during all steps of the preparation of the photographic product. This can include manufacturing data with regard to the various layers that are employed during the preparation of the film, information with regard to the properties of the various layers built onto the substrate and the like. Further, after the film is completed and is being used by the consumer, many and various applications can be envisioned wherein information is included in the magnetic layer that is helpful to the photographer, the developing laboratory and others engaged in this field of endeavor. For example, when a camera also has the capability of imparting data to a magnetic layer by having built in recording heads in the camera, information with regard to each frame of the film can be recorded, such as, the light conditions, the speed at which the frame is exposed, the F-Stop number and the like.

To apply a transparent magnetic layer to a support, a coating composition is prepared, for example by dispersing the aqueous magnetic particle dispersion in an aqueous medium containing a hydrophilic binder. Examples of Hydrophilic binders which can be used are those described in Research Disclosure No. 308119, December 1989, and No. 18716 (page 651) November 1979. Illustrative hydrophilic binders include water-soluble polymers, gelatin, gelatin derivatives, cellulose esters, latex derivatives, casein, agar, sodium alginate, starch, polyvinyl alcohol, polyacrylic acid copolymers and maleic anhydride copolymers and mixtures thereof. The cellulose esters include hydroxyl propyl cellulose, carboxymethyl cellulose and hydroxyethyl cellulose. The latex polymers include vinyl chloride copolymers, vinylidene chloride copolymers, acrylic ester copolymers, vinyl acetate copolymers and butadiene copolymers. Among them, gelatin is most preferred.

Gelatin may be any of so-called alkali-treated (lime treated) gelatin which was immersed in an alkali bath, prior to extraction thereof, an acid-treated gelatin which was immersed in an alkali bath prior to extraction thereof, an acid-treated gelatin which was immersed in both baths and enzyme-treated gelatin, as well as gelatin derivatives such as gelatin derivatized with aromatic sulfonyl chlorides, carboxylic acid chlorides, carboxylic acid anhydrides, aryl isocyanates, 1,4-diketones, etc. As generally disclosed in the photographic art, gelatin can be used in combination with colloidal albumin, casein, a cellulose derivative (such as carboxymethyl or hydroxyethyl cellulose), agar, sodium alginate, a saccharide derivative (such as a starch derivative or dextran), a synthetic hydrophilic colloid (such as polyvinyl alcohol, poly-N-vinylpyrolidone, a polyacrylic acid copolymer, polyacrylamide or a derivative or partial hydrolyzate thereof) or a gelatin derivative.

One of the problems faced when using aqueous colloids such as gelatin or gelatin derivatives as the binder for a transparent magnetic coating layer, however, is the selection of an optimum level for the binder. For a given transparency requirement, if the ratio of binder to magnetic particles is too high, the thickness of the final coated element will be high which will diminish the strength of the magnetic signal. Lowering the level of gelatin to give thinner (e.g., $< 5$ microns) coatings can give rise to 2 inherent problems: 1) the coated product will not chill set when needed in an adequate amount of time, creating nonuniformities during the drying operation and 2) as a result of velocity gradients existing in the coating operation as well as the high vertical component of the compaction forces during the drying operation, the otherwise well dispersed magnetic particles will move and orient themselves in one direction or flocculate. The result of the second effect will be increased haze and graininess in the resulting dried coating.

Accordingly, in a preferred embodiment of the invention, a photographic element is prepared with an aqueous coated magnetic layer of the desired transparency obtained from a coating composition that is not prone to haze formation upon coating thin layers by reducing the mobility of the magnetic particles during coating and drying, without a resulting increase in the quantity of the non-magnetic material laydown, and without increasing layer thickness. Any addenda used to accomplish the above objective should have the following additional properties - i) it should be water soluble or dispersible, ii) it should be compatible with binders such as gelatin and other required coating additives and,

most importantly iii) it should be transparent in the coating.

In accordance with a preferred embodiment of the invention, a substantially haze-free transparent magnetic layer is prepared by forming a coating composition prepared by incorporating into the aqueous dispersion containing finely dispersed magnetic particles and the hydrophilic binder gelatin, a polyelectrolyte having a molecular weight of greater than about 50,000 which is capable of interacting with gelatin so as to improve the stability of the wet coating. The polyelectrolyte is preferably used at from 0.1-50 wt%, based on the weight of gelatin, and may be one or a mixture of polyelectrolytes selected from the following: i) a water soluble or dispersible high molecular weight synthetic polymer derived from monomers having one or more pendant anionic moieties selected from $-OSO_3M$, $-SO_3M$, -COOM, and $-OPO(OM)_2$, where M represents a hydrogen atom, or a cationic couterion such as an alkali metal, an alkaline earth metal atom or a quaternary ammonium base etc., and ii) naturally occurring polymeric materials, such as polysaccharides, that have pendant anionic groups or have been modified to have anionic groups as described in i).

Polymeric agents which increase the viscosity of aqueous solutions can be broadly classified into two groups, very high molecular weight materials which can increase the viscosity of a solution by virtue of their molecular weight per se, and high molecular weight polylectrolytes as described herein which viscosify a solution through forming associative complexes with the charged groups of binders present in the aqueous medium. Examples of the former category are carboxymethylcellulose, hydroxyethylcellulose, polyacrylamides, etc. An inherent problem in using these materials as viscosifiers is the relatively large amounts of material needed which will not efficiently solve the problem of increasing the ratio of magnetic to non-magnetic material. Additionally, these materials frequently become incompatible with gelatin upon heating and drying. Polyelectrolytes which interact with gelatin, on the other hand, result in the formation of large size complexes even at low added levels which can result in relatively large increases in the low shear viscosity ($\gamma < 10s^{-1}$) of these solutions. Most importantly, these types of materials can be employed in relatively small amounts in order to render the particles substantially immobile during the drying process.

Generally, the polyelectrolytes useful in the invention are well known in the art and some are commercially available. Typically they comprise synthetic water soluble homo or copolymers bearing pendant ionic groups as described above, or water dispersible polymers such as polymeric latices with similar ionic surface groups. The copolymers comprise addition or condensation copolymers. Examples of preferred polyelectrolytes include polystyrene sulfonate, poly(acrylamide-co-2-acrylamido-2-methylpropane sulfonate), poly(styrene-co-maleic acid), polyesterionomers such as Eastman AQ55D™, latices such as acrylic acid containing copolymers. Since the association between the polyelectrolyte and the gelatin is ionic in nature, the preferred polyelectrolytes would be the one in which the level of the ionic component and the molecular weight is the highest. Here the efficiency of the polyelectrolyte is the highest, i.e., the smallest quantity is required to perform its job. In some cases, however, to ensure its compatibility with the binder and other components, copolymers are used with a judicious choice of the comonomers and the molecular weight of the polyelectrolyte.

The polyelectrolytes may also be naturally occurring polymers that have pendant anionic groups or have been modified to have anionic groups such as described above. An examples of the former is xanthan gum. Examples of the latter are dextran sulfate and cellulose sulfate, carboxylated or sulfonated carbohydrate ethers and sulfated polysaccharides.

The polyelectrolyte is preferably added to the gelatin in an aqueous solution at temperatures above the gel setting temperature and mixed well prior to addition of the magnetic dispersion.

The preferred average molecular weight of the polyelectrolyte polymers is in the range of 50,000 - 6,000,000, more preferably from about 100,000 - 6,000,000. The polyelectrolyte also preferably comprises from about 2 to 100 weight percent of units derived from anionic monomers, more preferably about 10 to 100 weight percent, and most preferably about 50 to 100 weight percent. The percentage of anionic monomer required to efficiently increase the viscosity of the coating solution through association with gelatin is generally inversly proportional to the molecular weight of the polyelectrolyte. The amount of polyelectrolyte used is preferably about 0.1 to 50 wt%, more preferably from about 0.1 to 25 wt% and most preferably about 1 to 10 wt%, the percentages being by weight of the gelatin. The amount of polyelectrolyte required to provide a coating solution viscosity sufficient to achieve haze free magnetic coatings is generally inversely proportional to the gelatin concentration. If the level of polyelectrolyte is too low to provide effective association with the gelatin, coatings tend to be hazy, while if the level is very high the coating solution viscosity may be too high for efficient coating operations. Additionally, it is desired to optimize the combined level of gelatin and polyelectrolyte in order to minimize layer thickness as thicker transparent magnetic layers may result in spacing losses for the magnetics.

Illustrative examples of polyelectrolytes which can be advantageously used in the present invention have the following structures. While not indicated in all the structures, the anionic substituents are associated with either hydrogen or a cationic counterion such as sodium, etc.

P-1

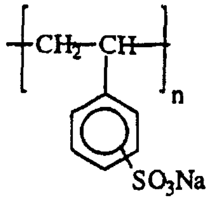

P-2

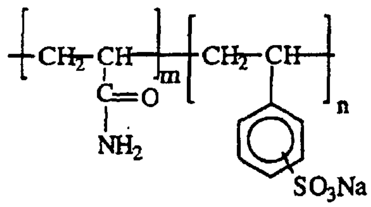

P-3

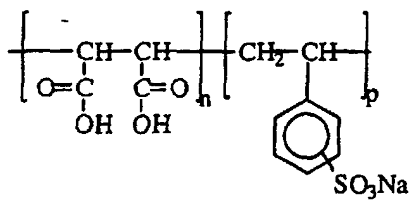

P-4

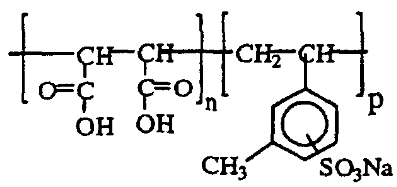

P-5

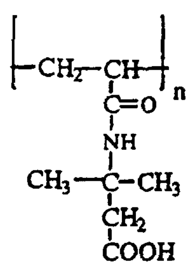

P-6

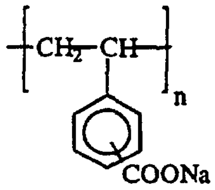

P-7

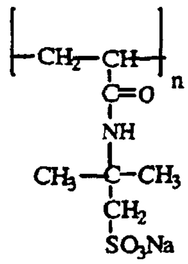

P-8

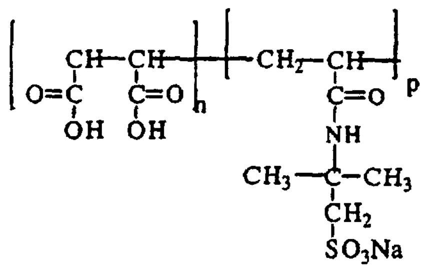

P-9

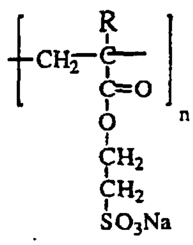

R is H or alkyl $C_1$-$C_4$

P-10

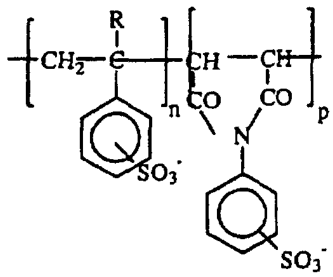

R is H or $C_1$-$C_4$ alkyl

P-11

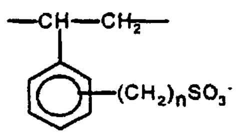

P-12

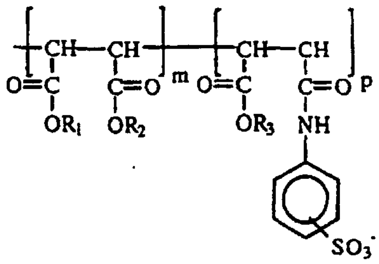

$R_1$, $R_2$, $R_3$ is M or $C_1$-$C_4$ alkyl

P-13

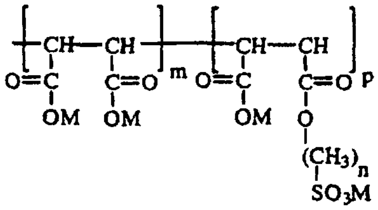

P-14

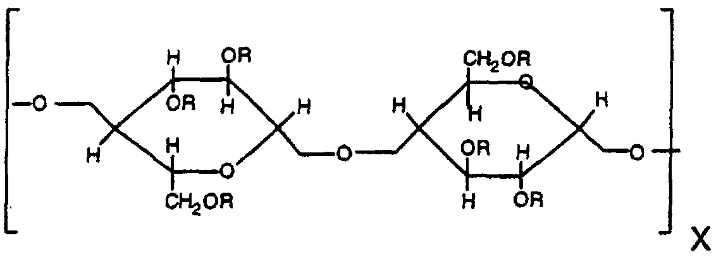

R is sulfoethyl

P-15

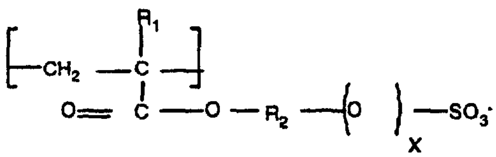

X is 0 or 1
$R_1$ is H or $C_1$-$C_4$ alkyl
$R_2$ is $C_1$-$C_4$ alkylene

P-16

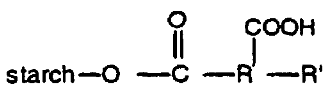

R is dimethylene or trimethylene
R' $C_2$-$C_8$ alkyl, $C_2$-$C_8$ alkenyl, aralkyl or aralkenyl

P-17

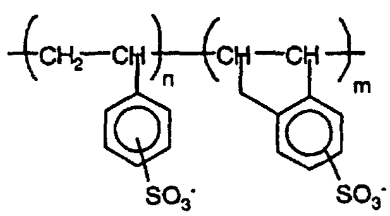

The above described coating compositions may be coated onto a suitable support either as is or along with additional or optional ingredients such as, crosslinking or hardening agents, coating aids, abrasive particles, lubricants, matting agents, antistatic agents, fillers and the like, before the coating operation. The coating composition can be chill-set and stored prior to use, then heated to coating temperature (40-60°C) just prior to coating. This cooling and re-heating does not adversely affect the quality of the coating or the magnetic properties of the resulting transparent magnetic recording layer.

The coating composition is applied to a suitable support which may contain additional layers for promoting adhesion, by any suitable coating device including slot die hoppers, gravure coaters, reverse roll coaters and the like. The thickness of the magnetic layer preferably should be about 0.5 to about 10 μm, more preferably about 0.5 to about 5 μm and most preferably about 1 to about 3 μm. The magnetic layer can also be overcoated with conventional layers

including antistats, protective overcoats, lubricants and the like.

Any suitable support may be employed in the practice of this invention, such as, cellulose derivatives including cellulose diacetate, cellulose triacetate, cellulose propionate, cellulose butyrate, cellulose acetatepropionate and the like; polyamides; polycarbonates; polyesters, particularly polyethylene terephthalate, poly-1,4-cyclohexanedimethylene terephthalate, polyethylene 1, 2-diphenoxyethane-4,4'-dicarboxylate, polybutylene terephthalate and polyethylene naphthalate; polystyrene, polypropylene, polyethylene, polymethyl-pentene, polysulfone, polyethersulfone, polyarylates, polyether imides and the like. Supports for photographic elements are described in Research Disclosure, December 1989, Item 308,119 published by Kenneth Mason Publications, Ltd., Dudley Annex, 12a North Street, Emsworth, Hampshire P010 7DQ, England, section XVII. Particularly preferred supports are polyethylene terephthalate, polyethylene naphthalate and the cellulose esters particularly cellulose triacetate.

Thickness of those supports used in the present invention is generally from 50 µm to 180 µm, preferably, 85 to 125 microns. In addition, various dyes may be formulated into the support or the magnetic layer to give neutral density. Depending upon the nature of the support, suitable transparent tie or undercoat layers may be desired. Particularly with regard to polyester supports, primers are used in order to promote adhesion. Any suitable primers in accordance with those described in the following U.S. patents may be employed: 2,627,088; 3,501,301; 4,689,359; 4,363,872; and 4,098,952.

The magnetic recording layer of the present invention containing gelatin or other hydrophilic colloid is preferably hardened. Hardeners include, for example, aldeyhde compounds such as formaldehyde and glutaraldehyde; ketone compounds such as diacetyl and cyclopentanedione; compounds having reactive halogens such as bis (2-chloroethylurea), 2-hydroxy-4,6-dichloro-1,3,5-trizine and those described in U.S. Patent Nos. 3,288,775 and 2,732,303 and British Patent Nos. 974,723 and 1,167,207; divinylsulfone, 5-acetyl-1,3-diacrylolhexahydro-1,3,5-triazine and reactive olefin-containing compounds such as divinylsulfone, 5-acetyl-1,2-diacryloyl-hexahydro-1,3,5-triazine, and the compounds such as divinylsulfone, 5-acetyl-1,3-diacryloyl-hexahydro-1,3,5-triazine, and the compounds disclosed in U.S. Patent numbers 3,635,718 and 3,232,763, and British Patent 994,869; N-hydroxymethylothalimide; N-methylol compounds such as N-hydroxymethylphthalimide and those described in U.S. Patent Nos. 2,732,316 and 2,586,168; isocyanates described in U.S. Patent Nos. 3,103,437; the aziridines disclosed in U.S. Patent Nos. 3,017,280 and 2,983,611; acid derivatives described in U.S. Patent Nos. 2,725,294 and 2,725,295; epoxy compounds described in U.S. Patent No. 3,091,537; and halogenated carboxyaldehydes such as mucochloric acid. Examples of inorganic hardeners include chrome alum, zirconium sulfate and the carboxyl group activating hardeners described in Japanese Patent Publication for opposition purpose (herein after referred to as J.P. Kokoku) Nos. 56-12853 and 58-32699, Belgian Patent No. 825,726, J.P. Kokai Nos. 60-225148 and 51-126125, J.P. Kokoku No. 58-50699. J.P. Kokai No. 52-54427 and U.S. Patent No. 3,321,313. The hardener is generally used in an amount of from 0.01 to 30 wt%, preferably from 0.05 to 20 wt%, to the amount of dried gelatin.

Additional ingredients can be included in the coating composition of this invention. In certain embodiments of the invention, the coating composition (and thus, the magnetic layer) contains abrasive particles or reinforcing fillers.

Examples of abrasive and/or reinforcing filler particles include nonmagnetic inorganic powders with a Mohs scale hardness of not less than 6. Specific examples are metal oxides such as alpha-alumina, chromium oxide (e.g., $Cr_2O_3$), iron oxide (e.g., alpha-$Fe_2O_3$), silicon dioxide, alumino-silicate and titanium dioxide; carbides such as silicon carbide and titanium carbide; nitrides such as, silicon nitride, titanium nitride; tin oxide, doped tin oxide, such as antimony or indium doped tin oxide; metal antimonates such as zinc antimonate and indium antimonate; and diamond in fine powder. Alpha alumina and silicon dioxide are the preferred abrasives in accordance with this invention. The abrasive and reinforcing filler particles can be pre-dispersed in water using the same dispersants as described in this invention and then incorporated into the coating composition.

Tin oxide particles in any form may be employed such as tin oxide per se or doped tin oxides, such as, antimony or indium doped tin oxide. The tin oxides and metal antimonates referred to above may be used in either the conductive or non-conductive form; however, when in the conductive form, an additional advantage is gained in that the layer also acts as an antistat. Suitable conductive particles are disclosed in U.S. Patents 4,495,276; 4,394,441; 4,431,764; 4,418,141 and 4,999,276. Useful tin oxide particles are commercially available from Keeling and Walker, Ltd. under the trade designation Stanostat CPM 375; DuPont Co. under the trade designation Zelec-ECP 3005XC and 3010SC and Mitsubishi Metals Corp. under the trade designation T-1. Preferred metal antimonates include those having rutile or rutile-related crystallographic structures as disclosed in U.S. Patent 5,368,995.

As noted, photographic elements in accordance with this invention comprise at least one photosensitive layer. Such photosensitive layers can be image-forming layers containing photographic silver halides such as silver chloride, silver bromide, silver bromoiodide, silver chlorobromide and the like. Both negative and reversal silver halide elements are contemplated. For reversal films, the emulsion layers as taught in U.S. Patent 5,236,817, especially Examples 16 and 21, are particularly suitable. Any of the known silver halide emulsion layers, such as those described in Research Disclosure, Vol. 176, December 1978 Item 17643 and Research Disclosure Vol. 225, January 1983 Item 22534, are useful in preparing photographic elements in accordance with this invention. Generally, the photographic element is

prepared by coating the support film on the side opposite the magnetic recording layer with one or more layers comprising a dispersion of silver halide crystals in an aqueous solution of gelatin and optionally one or more subbing layers, such as, for example, gelatin, etc. The coating process can be carried out on a continuously operating machine wherein a single layer or a plurality of layers are applied to the support. For multicolor elements, layers can be coated simultaneously on the composite support film as described in U.S. Pat. No. 2,761,791 and U.S. Pat. No. 3,508,947. Additional useful coating and drying procedures are described in Research Disclosure, Vol. 176, December 1978, Item 17643. Suitable photosensitive image forming layers are those which provide color or black and white images.

As is taught in U.S. Pat. No. 3,782,947 noted above, whether an element is useful for both photographic and magnetic recording depends on both the size distribution and concentration of the magnetic particles and on the relationship between the granularities of the magnetic and photographic coatings. Generally, of course, the coarser the grain of the emulsion in the photographic element that contains the magnetic recording layer, the larger the mean size of the magnetic particles which can be tolerated. A magnetic particle concentration between about 10 and 1000 $mg/m^2$ when uniformly distributed across the desired area of the photographic element will be sufficiently photographically transparent provided that the maximum particle size is less than about 1 micron. Particle concentrations less than about 10 $mg/m^2$ tend to be insufficient for magnetic recording purposes and particle concentrations greater than about 1000 $mg/m^2$ tend to be too dense for photographic purposes. Particularly useful particle concentrations are in the range of 20-70 $mg/m^2$. Concentrations of about 20 $mg/m^2$ have been found to be particularly useful in reversal films and concentrations of about 40 $mg/m^2$ are particularly useful in negative films.

The photographic elements according to this invention can contain one or more conducting layers such as antistatic layers and/or anti-halation layers such as such as described in Research Disclosure, Vol. 176, December 1978, Item 17643 to prevent undesirable static discharges during manufacture, exposure and processing of the photographic element. Antistatic layers conventionally used in color films have been found to be satisfactory for use herewith. Any of the antistatic agents set forth in U.S. Patent 5,147,768 may be employed. Preferred antistats include metal oxides, for example, tin oxide, antimony doped tin oxide, vanadium pentoxide, and metal antimonates.

The photographic elements according to this invention can be provided with a protective or lubricating layer, such as a wax layer, in or over the transparent magnetic recording layer. Suitable lubricants include silicone oil, silicones having polar groups, fatty acid-modified silicones, fluorine-containing silicones, fluorine-containing alcohols, fluorine-containing esters, polyolefins, polyglycols alkyl phosphates and alkali metal salts thereof, alkyl sulfates and alkali metal salts thereof, polyphenyl ethers, fluorine-containing alkyl sulfates and alkali metal salts thereof, monobasic fatty acids having 10 to 24 carbon atoms (which may contain unsaturated bonds or may be branched) and metal salts thereof (such as Li, Na, K and Cu), monovalent, divalent, trivalent, tetravalent, pentavalent and hexavalent alcohols having 12 to 22 carbon atoms (which may contain unsaturated bonds or may be branched), alkoxy alcohols having 12 to 22 carbon atoms, mono-, di- and tri-esters of monobasic fatty acids having 10 to 24 carbon atoms (which may contain unsaturated bonds or may be branched) and one of monovalent, divalent, trivalent, tetravalent, pentavalent and hexavalent alcohols having 2 to 12 carbon atoms (which may contain unsaturated bonds or may be branched), fatty acid esters of monoalkyl ethers of alkylene oxide polymers, fatty acid amides having 8 to 22 carbon atoms and aliphatic amines having 8 to 22 carbon atoms.

Specific examples of these compounds (i.e., alcohols, acids or esters) include lauric acid, myristic acid, palmitic acid, stearic acid, behenic acid, butyl stearate, oleic acid, linolic acid, linolenic acid, elaidic acid, octyl stearate, amyl stearate, isooctyl stearate, octyl myristate, butoxyethyl stearate, anhydrosorbitan monostearate, anhydrosorbitan distearate, anhydrosorbitan tristearate, pentaerythrityl tetrastearate, oleyl alcohol and lauryl alcohol.

The following examples illustrate the preparation of stable aqueous dispersions of magnetic particles and transparent magnetic recording layers in accordance with this invention.

Example 1

A finely divided concentrate of a magnetic material was made by milling 20 parts of Co-surface treated-γ-iron oxide powder supplied by Toda Kogyo under the trade designation CSF 4085V2 and 20 parts of a 50% by weight solution of the dispersant Syn Fac 8337 (sold by Milliken Chemical)in 70 parts deionized water in a small media mill. The sample was milled for 1-1.5 hours until the average particle size was down to 0.25 microns.

Example 2

0.225g of the dispersion from Example 1 was added to 14.7g of a 10% aqueous solution of deionized cowbone gelatin at 39°C and the mixture stirred at that temperature to yield a fine dispersion of ferric oxide in gelatin. The dispersion thus obtained was treated with 0.55g of 10% nonylphenoxy polyglycerol (obtained from Olin under the trade designation Olin10G), a coating aid, and coated on gel subbed cellulose triacetate at room temperature using a coating knife with a spacing of 0.0015 inch and dried at room temperature. Figure 1 shows a photomicrograph of the magnetic

layer produced in this example.

Example 3

0.45g of dispersion from Example 1 was added to gelatin and coated as described in Example 2. Figure 2 shows a photomicrograph of the magnetic layer produced in this example.

Example 4

The dispersion from Example 2 was treated with (2% by weight with respect to gelatin) bis(vinyl sulfonyl methyl ether), a hardener solution prior to coating on the support and dried at 55°C in air. Figure 3 shows a photomicrograph of the magnetic layer produced in this example.

Example 5

A dispersion of 0.21 micron α-alumina abrasive particles (commercially available from Sumitomo Chemical Company under the designation AKP50) was prepared in water by ball milling 25g AKP50, 10g of a 50% by weight solution of Syn Fac 8337 and 75g deionized water.

The dispersion from Example 2 was treated with a portion of the AKP50 dispersion described above such that the abrasive particles made up 0.235% of the total. This was coated as in Example 2. Figure 4 shows a photomicrograph of the magnetic layer produced in this example.

Example 6 (comparative)

A comparative coating of magnetic particles was prepared as described in Example 7 of U.S. Patent No. 5,217,804. First, a dispersion of magnetic particles, in methylene chloride, methyl alcohol, and butanol was prepared. Cellulose triacetate was added and the resulting composition was coated onto a cellulose ester support.

A photomicrograph of this coating is shown in Figure 5. A comparison of the photomicrographs of Figures 1-5 illustrate that the magnetic layers of Examples 2-5 prepared from aqueous systems are comparable to magnetic layer of Example 6 prepared from an organic solvent based system.

Example 7a

A finely divided concentrate of a magnetic material was made by milling 23.13 parts of Co-surface treated-γ-iron oxide powder (CSF 4085V2, Toda Kogyo) and 23.13 parts of a 50% by weight solution of the dispersant Syn Fac 8337 (sold by Milliken Chemical) in 65.3 parts deionized water in a media mill. The sample was milled for 2-3 hours until the average particle size was down to 0.25 microns.

To 5.624g of a 8.89% aqueous solution of deionized cowbone gelatin at 39°C was added 0.287g of a 8.7% aqueous solution of polystyrene sulfonate, sodium salt (TL502, National Starch Chemical Company), as the polyelectrolyte and 11.07g of distilled water and mixed well (5% polyelectrolyte based upon weight of the gelatin). To this was added 0.114g of the magnetic dispersion and the mixture stirred at that temperature to yield a fine dispersion of ferric oxide in the combined polyelectrolyte and gelatin. This mixture was treated with 0.105g of a 25.24% ballmilled aqueous dispersion of alpha-alumina abrasive particles (AKP50, Sumitomo Chemical Company).

The dispersion thus obtained was treated with 0.4g of 10% nonylphenoxy polyglycerol (obtained from Olin under the trade designation Olin 10G) and 0.4g of 5% dioctyl ester of sodium sulfosuccinic acid (obtained from American Cyanamid under the trade designation Aerosol OT100) as coating aids, and 2g of a 2% solution of the hardner, bis (vinyl sulfonyl methyl ether), and coated on gel subbed cellulose triacetate at room temperature using a coating knife with a spacing of 0.002 inch and dried at room temperature.

Examples 7b-7k

Coated samples of magnetic recording layers were prepared as in Example 7a, using higher levels of polystyrene sulfonate of the type used in Example 7a (Examples7b and 7c), or substituting various other polyelectrolytes within the scope of the invention (Examples 7d-7h) or comparative polymeric additives (Examples 7i-7j) or additional gelatin (Example 7k) for the polystyrene sulfonate of Example 7a at equal weight.

Measurement of optical quality

The optical quality of the magnetic coatings prepared in Examples 7a-7k was measured by determining the Quality Factor of the dried magnetic coating on a transparent support. The term "Quality Factor" (QF) as used herein is a measure of the optical quality, the corresponding haze and transparency of the coating as they relate to the rate of decay of the light absorbance of the coating between about 390 and 800nm. The rate of decay is determined by calculating the ratios of the absorbances at various wavelengths and comparing the values to those of a reference sample known to have an acceptable dispersion of magnetic particles, transparency and haze. The reference sample is given a QF of 100. The value is independant of laydown since it is based on ratios of absorbances.

The solvent reference example originates from a high quality solvent-coated dilute suspension of Cobalt surface treated $\gamma$-$Fe_2O_3$ magnetic particles and is used here as a benchmark for the aqueous based coatings which contain the same magnetic particles. A well-dispersed coating will have an absorbance spectrum which falls off relatively rapidly above 390 nm, eventually becoming virtually transparent in the 800 nm range, while a relatively poorly-dispersed coating will not fall off as rapidly and have relatively higher absorbance. Hence there is a connection between dispersion quality and the rate at which absorbance decreases at higher wavelengths in the visible region due to the effect of particle size on the shape of the turbidity spectrum.

The rate of decrease may be quantified by taking a ratio of absorbances at different wavelengths. After reading the absorbance levels at 390, 540, and 740 nm measured by a Perkin-Elmer 320 spectrophotometer, the Quality Factor QF is determined as follows:

$$QF = \frac{100\left[\frac{\text{Abs. (390)}}{\text{Abs. (740)}} + \frac{\frac{\text{Ref.Abs. (390)}}{\text{Ref.Abs. (740)}}}{\frac{\text{Ref.Abs. (390)}}{\text{Ref.Abs. (540)}}} \frac{\text{Abs. (390)}}{\text{Abs. (540)}}\right]}{2\left[\frac{\text{Ref.Abs. (390)}}{\text{Ref.Abs. (740)}}\right]}$$

Abs.(nm) refers to the absorbance of the coating (or optical density due to scattering and absorbance) at the indicated wavelength, while Ref.Abs.(nm) refers to the absorbance of a solvent-coated reference sample known to have an acceptable particle size distribution. This formula places roughly equal weight on the two different absorbance ratios (exactly equal for the reference sample) and, because it is based on ratios of absorbances, it is not dependent upon the laydown level. A quality factor for comparative purposes may also be obtained using other absorbance wavelengths in addition to or in place of those specified above if desired.

The reference sample mentioned above assigned a QF of 100 is a magnetic layer on a support produced from an organic casting solution of magnetic particles as described in Example 7 of U.S. Patent 5,217,804. The Reference* sample cited in Table I below is similar to the standard reference sample except that it contains the abrasive particles (AKP 50) which causes the QF to decrease from 100 to 84.

Table I below shows the various polymeric additives that were used and the QFs obtained for the dried coatings.

Table I

| EXAMPLE No. | POLYMERIC ADDITIVE [wt% based on weight of gelatin] | AVERAGE MW | QUALITY FACTOR |
|---|---|---|---|
| 7a | Polystyrene sulfonate, sodium salt [5%] (National Starch Chemical Co. TL502) | ~800,000 | 81 |
| 7b | Polystyrene sulfonate, sodium salt [7%] (National Starch Chemical Co. TL502) | ~800,000 | 83 |
| 7c | Polystyrene sulfonate, sodium salt [10%] (National Starch Chemical Co. TL502) | ~800,000 | 89 |
| 7d | Polystyrene sulfonate, sodium salt [5%] (National Starch Chemical Co. TL132) | ~110,000 | 73 |
| 7e | Polyacrylic acid [5%] (Scientific Polymer Products Inc.) | ~250,000 | 80 |
| 7f | Poly(styrene sulfonate, sodium salt-co-maleic anhydride) (3:1 molar ratio) [5%] | >250,000 | 90 |
| 7g | Xanthan Gum [5%] (Sigma Chemical Co.) | >1,000,000 | 75 |

Table I (continued)

| EXAMPLE No. | POLYMERIC ADDITIVE [wt% based on weight of gelatin] | AVERAGE MW | QUALITY FACTOR |
|---|---|---|---|
| 7h | Dextran sulfate, sodium salt [5%] (PolySciences) | ~500,000 | 70 |
| 7i (Comparison) | Methyl cellulose [5%] (Visc. of 2% solution @ 25°C = 4,000cp) (Sigma Chemical Co.) | - | 53 |
| 7j (Comparison) | Poly(styrene sulfonate, sodium salt-co-maleic anhydride) [5%] (National Starch Chemical Co. Narlex D72) | ~15,000 | 43 |
| 7k (Comparison) | None [5% added gelatin] | - | 64 |
| Reference* | Organic Solvent Coated | - | 84 |

The above results demonstrate the advantageous effect of adding a polyelectrolyte to an aqueous magnetic coating composition comprising gelatin as a film-forming binder.

**Claims**

1. A photographic element comprising a photographic support, a light sensitive layer and a transparent magnetic recording layer, wherein the magnetic recording layer is prepared by combining a film-forming binder and a stable fine solid particle aqueous dispersion comprising an aqueous medium containing dispersed magnetic particles and from 20 to 100 wt%, based on the weight of the dispersed magnetic particles, of a surface active dispersant having an HLB number of at least 8 to form a coating composition and applying said coating composition onto said photographic support, wherein the surface active dispersant having an HLB number of at least 8 is selected from the group of amphipathic water-soluble or water-dispersible polymers represented by one of the following structures I-IV:

A-B    A-B-A    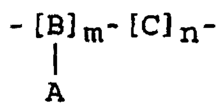    and    $(AB)_xQ(BA)_z$

I    II    III    IV

wherein each A independently represents a poly(ethylene oxide), polyethyloxazoline, poly(vinyl alcohol), or poly (vinyl pyrrolidone) unit water soluble component having up to 150 repeat units; B and C each represent a linear or branched alkyl, aryl, alkaryl or cyclic alkyl radical containing at least 7 carbon atoms, or 3 to about 100 repeat units of a propylene oxide or higher alkylene oxide or combinations thereof; Q represents a multivalent linking group; m = 50-100 mole % and n = 1-50 mole % with the proviso that m + n = 100 mole %, x = 1 or 2 and z = 1 or 2, and with the further proviso the polymeric dispersant excludes compounds comprising 4 or less ethylene oxide units.

2. An element of claim 1, wherein the dispersant has the formula:

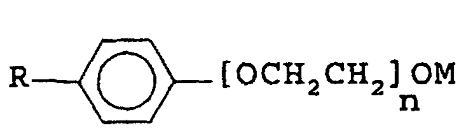

n = 5 - 25

R = aryl, alkyl, aralkyl

$$M = H, SO_3^- X^+, \text{ or } PO_3^{2-} 2X^+$$

where X is cation.

**3.** An element of claim 1, wherein the dispersant is a phosphated alkyl or aryl phenol alkoxylate.

**4.** An element of any of claims 1-3, wherein the magnetic recording layer further contains abrasive particles.

**5.** An element of any of claims 1-4, wherein the stable fine solid particle aqueous dispersion of magnetic particles is formed by a process which comprises the steps of:

(a) forming an aqueous slurry of solid magnetic particles and the surface active dispersant having an HLB number of at least 8; and
(b) milling said slurry for a period of time sufficient to ensure that substantially no agglomerates of the magnetic particles are present.

**6.** An element of any of claims 1-5, wherein the film forming binder comprises gelatin.

**7.** An element according to claim 6, wherein the film forming binder is added in the form of an aqueous gelatin solution comprising from 0.1 to 50 wt%, based on the weight of the gelatin, of a polyelectrolyte or mixture of polyelectrolytes having an average molecular weight greater than 50,000 selected from i) water soluble or dispersible synthetic polymers derived from monomers having one or more pendant anionic moieties selected from $-OSO_3M$, $-SO_3M$, $-COOM$, and $-OPO(OM)_2$, where M represents a hydrogen atom or a cation counterion, and ii) naturally occurring polymeric materials bearing pendant anionic moieties as described in i).

**8.** An element of any of claims 1-7, wherein the magnetic particles exhibit coercive force above 500 Oe and saturation magnetization above 70 emu/g.

**9.** An element of any of claims 1-8, wherein the dispersant is present in the stable fine solid particle aqueous dispersion at from 25 to 75 wt%, based on the weight of the dispersed magnetic particles.

## Patentansprüche

**1.** Fotografisches Element mit einem fotografischen Träger, einer lichtempfindlichen Schicht und einer transparenten Magnetaufzeichnungsschicht, worin die Magnetaufzeichnungsschicht dadurch herstellbar ist, dass ein filmbildendes Bindemittel mit einer stabilen, feine Feststoffpartikel umfassenden, wässrigen Lösung kombiniert wird, die ein wässriges Medium umfasst, das dispergierte Magnetpartikel enthält, sowie von 20 bis 100 Gew.-%, bezogen auf das Gewicht der dispergierten Magnetpartikel, eines oberflächenaktiven Dispergiermittels mit einem HLB-Wert von mindestens 8, um eine Beschichtungszusammensetzung zu bilden und diese Beschichtungszusammensetzung auf den fotografischen Träger aufzubringen, worin das oberflächenaktive Dispergiermittel mit einem HLB-Wert von mindestens 8 aus der Gruppe von amphipatischen, wasserlöslichen oder wasserdispergierbaren Polymeren auswählbar ist, die durch eine der folgenden Strukturen I-IV darstellbar sind:

$$\underset{\text{I}}{A\text{-}B} \qquad \underset{\text{II}}{A\text{-}B\text{-}A} \qquad \underset{\text{III}}{\begin{array}{c}-[B]_m-[C]_n- \\ | \\ A\end{array}} \qquad \text{und} \qquad \underset{\text{IV}}{(AB)_xQ(BA)_z}$$

worin jeweils A unabhängig für eine Poly(ethylenoxid)-, Polyethyloxazolin-, Poly(vinylalkohol)- oder Poly(vinylpyrrolidon)-Einheit einer wasserlöslichen Verbindung mit bis zu 150 Wiederholungseinheiten steht; B und C jeweils

für ein lineares oder verzweigtes Alkyl-, Aryl-, Alkaryl- oder zyklisches Alkylradikal steht, das mindestens 7 Kohlenstoffatome enthält oder 3 bis ca. 100 Wiederholungseinheiten eines Propylenoxids oder höherer Alkylenoxide oder Kombinationen daraus; Q für eine mehrwertige Verknüpfungsgruppe steht; m = 50-100 Mol% und n = 1-50 Mol%, unter der Voraussetzung, dass m + n = 100 Mol%, x = 1 oder 2 und z = 1 oder 2, und unter der weiteren Voraussetzung, dass das polymere Dispergiermittel Verbindungen ausschließt, die 4 oder weniger Ethylenoxideinheiten umfassen.

**2.** Fotografisches Element nach Anspruch 1, worin das Dispergiermittel folgende Formel aufweist:

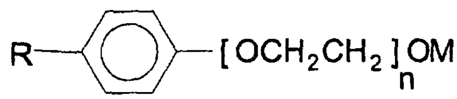

$n = 5 - 25$

R = Aryl, Alkyl, Aralkyl

M = H, $SO_3^- X^+$, oder $PO_3^{2-} 2X^+$

worin X ein Kation ist.

**3.** Fotografisches Element nach Anspruch 1, worin das Dispergiermittel ein phosphatiertes Alkyl- oder Arylphenolalkoxylat ist.

**4.** Fotografisches Element nach einem der Ansprüche 1-3, worin die Magnetaufzeichnungsschicht zudem Schleifpartikel umfasst.

**5.** Fotografisches Element nach einem der Ansprüche 1-4, worin die stabile, feine Feststoffpartikel enthaltende, wässrige Dispersion von Magnetpartikeln durch ein Verfahren herstellbar ist, das folgende Schritte umfasst:

(a) Erzeugen einer wässrigen Masse aus festen Magnetpartikeln und dem oberflächenaktiven Dispergiermittel mit einem HLB-Wert von mindestens 8; und
(b) Mahlen dieser Masse für eine Zeitdauer, die ausreicht, um sicherzustellen, das im Wesentlichen keine Agglomerate von Magnetpartikeln vorhanden sind.

**6.** Fotografisches Element nach einem der Ansprüche 1-5, worin das filmbildende Bindemittel Gelatine umfasst.

**7.** Fotografisches Element nach Anspruch 6, worin das filmbildende Bindemittel in Form einer wässrigen Gelatinelösung zugegeben wird, die von 0,1 bis 50 Gew.-%, bezogen auf das Gewicht der Gelatine, eines Polyelektrolyts oder einer Mischung von Polyelektrolyten mit einem mittleren Molekulargewicht von größer als 50.000 umfasst, ausgewählt aus i) wasserlöslichen oder dispergierbaren, synthetischen Polymeren, abgeleitet von Monomeren mit einer oder mehreren schwebenden, anionischen Anteilen, die aus $-OSO_3M$, $-SO_3M$, -COOM und $-OPO(OM)_2$ auswählbar sind, wobei M für ein Wasserstoffatom oder ein Kation-Gegenion steht und ii) natürlich vorkommenden Polymermaterialien, die schwebende, anionische Anteile, wie unter i) beschrieben, umfassen.

**8.** Fotografisches Element nach einem der Ansprüche 1-7, worin die Magnetpartikel eine Koerzitivfeldstärke von über 39790 A/m und eine Sättigungsmagnetisierung von über 70 E.M.E/g aufweisen.

**9.** Fotografisches Element nach einem der Ansprüche 1-8, worin das Dispergiermittel in der stabilen, feine Feststoffpartikel umfassenden, wässrigen Lösung mit einem Anteil zwischen 25 und 75 Gew.-%, bezogen auf das Gewicht der dispergierten Magnetpartikel, vorhanden ist.

## Revendications

1. Elément photographique comprenant un support photographique, une couche photosensible et un couche d'enregistrement magnétique transparente, dans lequel la couche d'enregistrement magnétique est préparée en combinant un liant filmogène et une dispersion aqueuse stable de particules solides comprenant un milieu aqueux contenant des particules magnétiques dispersées et 20 à 100 % en poids, par rapport au poids des particules magnétiques dispersées, d'un agent dispersant tensioactif ayant un rapport hydrophile-lipophile (HLB) d'au moins 8 pour former une composition de revêtement, et en appliquant ladite composition de revêtement sur ledit support photographique, dans lequel l'agent dispersant tensioactif ayant un rapport HLB d'au moins 8 est choisi dans la groupe des polymères amphipathiques solubles dans l'eau ou dispersibles dans l'eau représentés par l'une des structures I-IV suivantes :

A-B   A-B-A   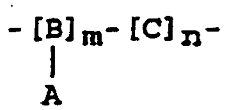   et   $(AB)_xQ(BA)_z$

I   II   III   IV

dans lesquelles chaque A représente séparément un constituant soluble dans l'eau comprenant jusqu'à 150 motifs récurrents de poly(éthylène oxyde), polyéthyloxazoline, alcool polyvinylique ou polyvinylpyrrolidone ; B et C représentent chacun un radical alkyle, aryle ou alkaryle linéaire ou ramifié ou un radical alkyle cyclique contenant au moins 7 atomes de carbone, ou 3 à environ 100 motifs récurrents d'un oxyde de propylène ou d'un oxyde d'alkylène supérieur, ou de combinaisons de ceux-ci ; Q représente un groupe de liaison polyvalent ; m = 50 à 100 % en moles et n = 1 à 50 % en moles à condition que m + n = 100 % en moles, x = 1 ou 2 et z = 1 ou 2, et à condition aussi que l'agent dispersant polymère exclut les composés comprenant 4 motifs d'oxyde d'éthylène ou moins.

2. Elément photographique selon la revendication 1, dans lequel l'agent dispersant a la formule :

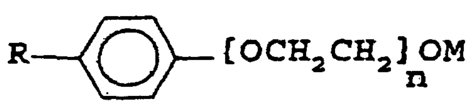

n = 5 à 25

R = aryle, alkyle, aralkyle

$M = H, SO_3^- X^+$ ou $PO_3^{2-} 2X^+$

où X représente un cation.

3. Elément photographique selon la revendication 1, dans lequel l'agent dispersant est un phénol-alcoxylate d'aryle ou d'alkyle phosphaté.

4. Elément photographique selon l'une quelconque des revendications 1 à 3, dans lequel la couche d'enregistrement magnétique contient aussi des particules abrasives.

5. Elément photographique selon l'une quelconque des revendications 1 à 4, dans lequel la dispersion aqueuse stable de fine particules magnétiques solides est préparée par un procédé comprenant les étapes de :

(a) préparation d'une bouillie aqueuse de particules magnétiques solides et de l'agent dispersant tensioactif ayant un rapport HLB d'au moins 8 ; et
(b) broyage de ladite bouillie pendant une durée suffisante pour s'assurer que pratiquement aucun agglomérat de particules magnétiques n'est encore présent.

**6.** Elément photographique selon l'une quelconque des revendications 1 à 5, dans lequel le liant filmogène comprend de la gélatine.

**7.** Elément photographique selon la revendication 6, dans lequel le liant filmogène est ajouté sous la forme d'une solution aqueuse de gélatine comprenant 0,1 à 50 % en poids, par rapport au poids de la gélatine, d'un polyélectrolyte ou un mélange de polyélectrolytes ayant un poids moléculaire moyen supérieur à 50 000 choisi parmi i) les polymères synthétiques solubles dans l'eau ou dispersibles dans l'eau issus de monomères ayant un ou plusieurs groupes anioniques pendants choisis-parmi $-OSO_3M$, $-SO_3M$, -COOM et $-OPO(OM)_2$, où M représente un atome d'hydrogène ou un contre-ion cationique, et ii) les matériaux polymères naturels portant des groupes anioniques pendants, tels que décrits en i).

**8.** Elément photographique selon l'une quelconque des revendications 1 à 7, dans lequel les particules magnétiques présentent une force coercitive supérieure à 500 Oe et une magnétisation à saturation supérieure à 70 emu/g.

**9.** Elément photographique selon l'une quelconque des revendications 1 à 8, dans lequel l'agent dispersant est présent dans la dispersion aqueuse stable de fines particules solides à une concentration comprise entre 25 et 75 % en poids, par rapport au poids des particules magnétiques dispersées.

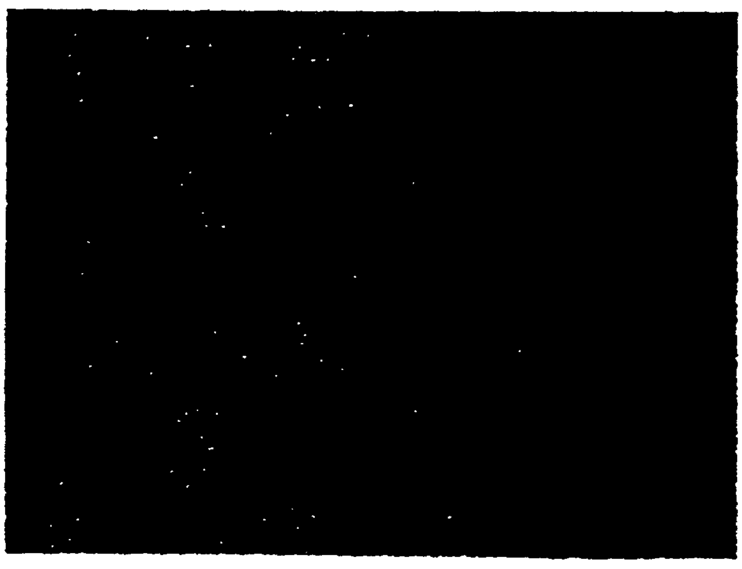

FIG. 1

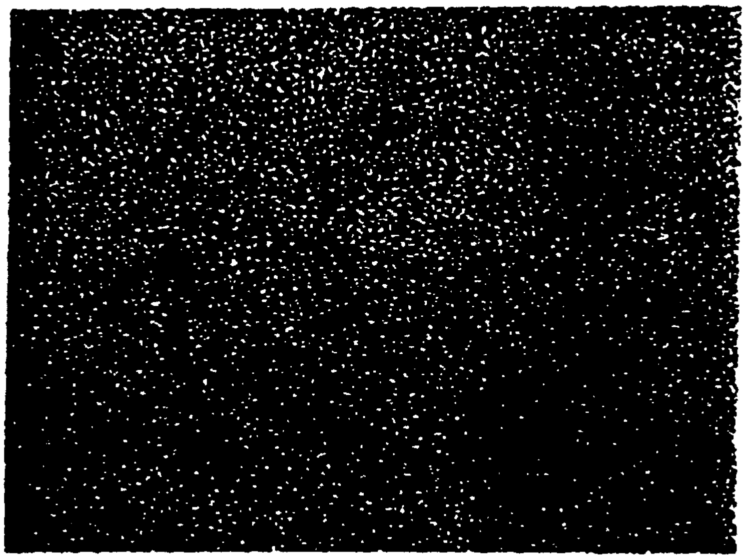

FIG. 2

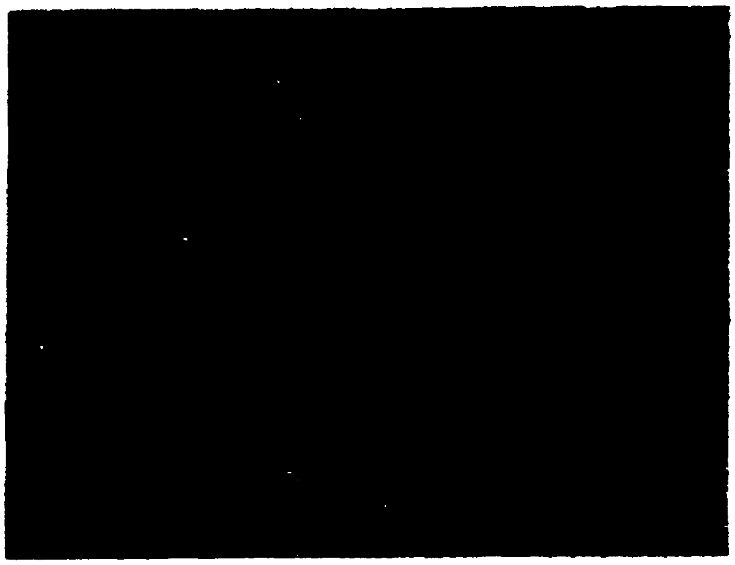

FIG. 4

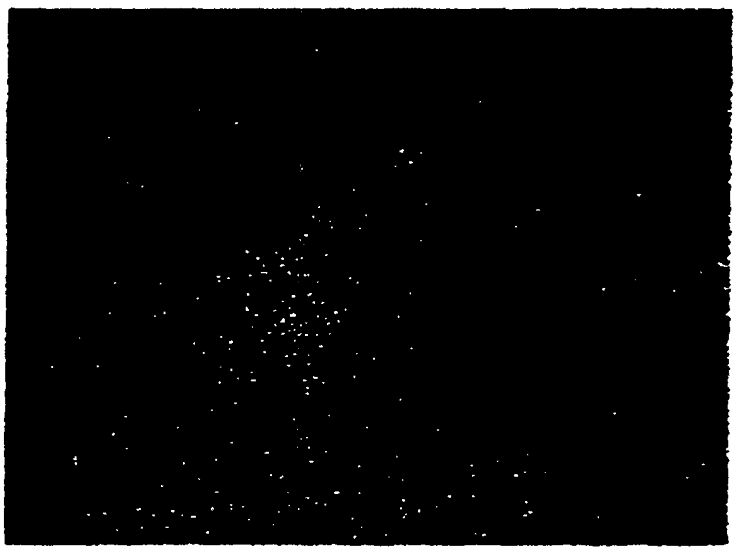

FIG. 3

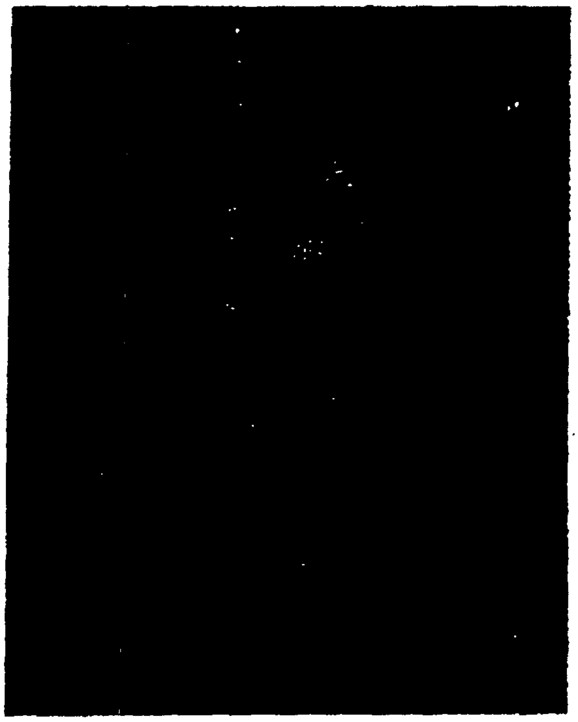

FIG. 5